(19) Europäisches Patentamt
European Patent Office
Office européen des brevets

(11) **EP 2 983 115 A1**

(12) **EUROPEAN PATENT APPLICATION**

(43) Date of publication:
**10.02.2016 Bulletin 2016/06**

(51) Int Cl.:
***G06Q 10/06*** *(2012.01)*

(21) Application number: **14197578.9**

(22) Date of filing: **12.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.08.2014 TW 103126788**

(71) Applicant: **Environmental Protection Administration,
R.O.C.(Taiwan)
Taipei City 10042 (TW)**

(72) Inventors:
• **Tsai, Hung-Teh
10042 Taipei City (TW)**

• **Yang, Kai-Hsing
10042 Taipei City (TW)**
• **Chen, Shen-De
10042 Taipei City (TW)**
• **Kuan, Yung-Kai
10042 Taipei City (TW)**
• **Sun, Tung-Ching
10042 Taipei City (TW)**

(74) Representative: **Gee, Steven William
D.W. & S.W. GEE
1 South Lynn Gardens
London Road
Shipston on Stour
Warwickshire CV36 4ER (GB)**

(54) **Environmental risk sorting system**

(57) An environmental risk sorting system includes a plant environment database for storing environmental risk data; a risk sorting server for updating the environmental risk data; a managing server coupled with the risk sorting server, wherein, the risk sorting server comprising: a first risk evaluation module, based on the environmental risk data, generates a first risk evaluation result for each abandoned plant, which produces an environmental site evaluation list, through which, an environmental site evaluation data of each abandoned plant and a on-spot environmental site evaluation data are obtained; and a second risk evaluation module, based on the environmental site evaluation data and said on-spot environmental site evaluation data of each abandoned plant, generates a second risk evaluation result for each abandoned plant, which, in turn, produces an investigation list of each abandoned plant as a basis for follow-up investigation.

**FIG. 1**

**Description**

CROSS-REFERENCE TO RELATED APPLICATION

This application claims the priority of Taiwanese patent application No. 103126788, filed on August 5, 2014, which is incorporated herewith by reference.

BACKGROUND OF THE INVENTION

1. Field of the Invention

The present invention relates generally to an environmental risk sorting system, and more particularly an environmental risk sorting system for monitoring abandoned plants which cause environmental pollution.

2. The Prior Arts

Industrial pollution is one major cause for underground water pollution, since wastes or pollutants are directly or indirectly discharged into the ground without adequate treatment to remove harmful compounds. Some abandoned plants cause high environmental risk to the ground upon which the plants are built prior to shutdown or abandonment. The currently running plants or plants need more attention since they constantly generate environmental risk if no proper environmental safety measurement is taken during the running period, and the land left by those abandoned plants may be contaminated. So that an environmental risk sorting system is required to effectively sorting each of the abandoned plants as the basis for follow-up investigation for monitoring the abandoned plants.

A conventional way of sorting abandoned plants causing high environmental risk includes fetching the recorded basic information stored within a computer set and evaluating the basic information so as to generate a risk evaluation result for each abandoned plant, which in turn, produces an environmental site evaluation list. Since the environmental site evaluation list includes names of abandoned plants and location sites, it is taken as the basis for follow-up investigation and management of the location sites. It is noted the earlier basic information of the abandoned plants are recorded not in properly arranged system or lacking some important factor such an environmental risk level defined by evaluating base on the former may consist some potential environmental risk and hence will not be a perfect one owing to exclusion of the on-spot environmental site evaluation information. In addition, the conventional way, each piece of plant information is inputted into the single computer set, then only the follow-up evaluation process can be conducted, and the investigation result is fetched only through that single computer set, thereby inconveniencing the user.

Therefore, the conventional way of environmental risk sorting cannot handle a tremendously large amount of record information and incomplete information leads to waste of human labor, time, cost and hence the management of material, needs to be upgraded urgently.

SUMMARY OF THE INVENTION

The object of the present invention is to provide an environmental risk sorting system that can eliminate the above-mentioned drawbacks resulted from the use of the conventional environmental risk sorting way and that can update a plant environmental database so as generate on-spot data of each abandoned plant, thereby obtaining an environmental risk evaluation result substantially similar to the present condition. In addition, the environmental risk sorting system of the present invention is capable of fetching, analyzing and storing several pieces of environmental risk sorting data within a plant environment database so as to generate an environmental risk evaluation result to supply an investigator and a management recorder, where under different analyzing procedures result in the environmental risk evaluation result or data, thereby facilitating the follow-up management and investigation.

An environmental risk sorting system of the present invention for monitoring abandoned plants which cause environmental pollution, includes: a plant environment database for storing environmental risk data; a risk sorting server coupled with the plant environment database for updating the environmental risk data; a managing server coupled with the risk sorting server, characterized in that: the risk sorting server comprises a first risk evaluation module, based on the environmental risk data, generates a first risk evaluation result for each abandoned plant, which produces an environmental site evaluation list, through which, an environmental site evaluation data of each abandoned plant and on-spot environmental site evaluation data are obtained, and a second risk evaluation module, based on the environmental site evaluation data and said on-spot environmental site evaluation data of each abandoned plant, generates a second risk evaluation result for each abandoned plant, which, in turn, produces an investigation list of each abandoned plant as a basis for follow-up investigation.

The environmental risk sorting system of the present invention is capable of conducting a conditional sorting procedure based on the environmental risk data so as to classify the abandoned plants into different groups.

Preferably, the risk sorting server is capable of storing the environmental site evaluation data and the on-spot environmental risk data into the environmental risk database.

The risk sorting server preferably includes a first risk evaluation module and a second risk evaluation module.

The risk sorting server preferably includes an input/output interface for receiving the environmental site evaluation data and the on-spot environmental risk data and outputting the environmental site evaluation list and the investigated list to the managing server.

The environmental risk data preferably includes pollution potential factor data and environmental factor data.

In the present invention, the risk sorting server is coupled to a value computing server, wherein, the value computing server is further coupled to a pollution factor database so as to compute out the pollution potential factor data for supplying to the risk sorting server.

The environmental risk sorting system of the present invention further includes a geographic analyzing server coupled to the risk sorting server, a transfer factor database and a risk factor receptor database respectively connected to the geographic analyzing server so as to obtain the environmental factor data after analyzing process for transmitting to the risk sorting server.

Preferably, the value computing server further includes a value computing module or the geographic analyzing server further includes a geographic analyzing module, wherein the value computing module generates the pollution potential factor data based on the pollution potential factor while the geographic analyzing module generates the environmental factor data based on the transfer factor data and the transfer receptor factor data.

The value computing server is preferably coupled to a pollution factor database so as to fetch data therefrom and generates the pollution potential factor data for storing within the plant environment database.

The risk sorting server further includes a value computing module which generates the pollution potential factor data after computing process based on the pollution potential factor.

The risk sorting server is further coupled to the transfer factor database and the risk factor receptor database to obtain the environmental factor data for storing within the plant environment database.

The environmental risk sorting system of the present invention further includes a geographic analyzing module coupled to the risk sorting server, wherein the geographic analyzing module obtains the environmental factor data after analyzing transfer factor data and risk factor receptor data.

The risk sorting server further includes a statistics module for generating a risk evaluation result, which generates a statistic table after fetching data from the risk sorting server and a drawing module for generating, based on the risk evaluation result and the statistic table, an environmental risk evaluation map.

The risk evaluation result preferably includes a first risk evaluation result and a second risk evaluation result.

The risk sorting server is capable of fetching data from the plant environment database, the pollution factor database, the transfer factor database or the risk factor receptor database.

The drawing module generates, based on an investigated progress and management data supplied by the managing server, an investigated scope map, which includes a plurality of digitally shown location areas, each with a specific scope representing the investigated progress and management data.

The managing server includes a management recorder for recording the investigated progress and management data, and for fetching the environmental site evaluation list, the investigation list, the statistic table or the environmental risk evaluation map from the risk sorting server.

The managing server preferably includes a management record system for recording the investigated progress and management data, and for fetching the environmental site evaluation list, the investigation list, the statistic table or the environmental risk evaluation map from the risk sorting server.

The first risk evaluation result includes a first risk evaluation value, from which, a first risk level is defined, wherein, the environmental site evaluation list is defined based on the first risk level.

The second risk evaluation result includes a second risk evaluation value, from which, a second risk level is defined, wherein, the investigation list is defined based on the second risk level.

Since the environmental risk sorting system of the present invention is capable of fetching, analyzing and storing data within and from the plant environment database, thereby obtaining the updated data from the database and the on-spot data of the abandoned plants and generating the environmental risk evaluation result substantially similar to the current ones. In addition, the environmental risk sorting system of the present invention permits an investigator to enter the management record system to classify the abandoned plants into different groups so as to facilitate the follow-up investigation for the specific group with lesser pollution, thereby avoiding the undesired investigation process.

BRIEF DESCRIPTION OF THE DRAWINGS

The present invention will be apparent to those skilled in the art by reading the following detailed description of a preferred embodiment thereof, with reference to the attached drawings, in which:

Fig. 1 illustrates a first embodiment structure representing an environmental risk sorting system of the present invention;

Fig. 2 shows a block diagram representing a plant environment database and a risk sorting server employed in the environmental risk sorting system of the present invention;

Fig. 3 illustrates a block diagram including the steps of environmental risk sorting operation according the environmental risk sorting system of the present invention;

Fig. 4 illustrates a modified first embodiment structure representing the environmental risk sorting system of the present invention;

Fig. 5 illustrates a second embodiment structure representing the environmental risk sorting system of the present invention;

Fig. 6 shows a block diagram representing a plant environment database and a risk sorting server employed in the second embodiment structure of the environmental risk sorting system of the present invention;

Fig. 7 illustrates a modified second embodiment structure representing the environmental risk sorting system of the present invention;

Fig. 8 shows an environmental risk evaluation map employed in the environmental risk sorting system of the present invention; and

Fig. 9 shows a top planar view of an investigated scope map employed in the environmental risk sorting system of the present invention.

## DETAILED DESCRIPTION OF THE PREFERRED EMBODIMENTS

The accompanying drawings are included to provide a further understanding of the invention, and are incorporated in and constitute a part of this specification. The drawings illustrate embodiments of the invention and, together with the description, serve to explain the principles of the invention.

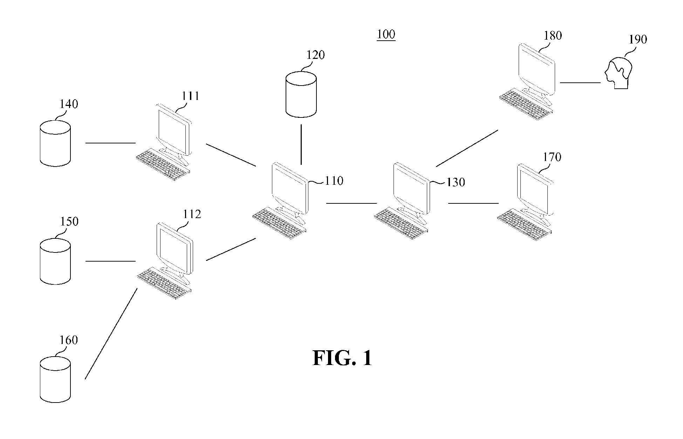

Fig. 1 illustrates a first embodiment structure representing an environmental risk sorting system 100 of the present invention. As shown, the environmental risk sorting system 100 of the present invention includes a plant environment database 120 for storing several pieces of environmental risk data, a risk sorting server 110 coupled with the plant environment database 120 for updating the several pieces of environmental risk data; a managing server 130 coupled with the risk sorting server 110, wherein, the risk sorting server 110 executes the following: generating through a first risk evaluation module, based on the several pieces of environmental risk data, a first risk evaluation result for each abandoned plant, which produces an environmental site evaluation list, through which, an environmental site evaluation data of each abandoned plant and a on-spot environmental site evaluation data are obtained, updating through a second risk evaluation module succeeding environmental risk data based on the environmental site evaluation data of each abandoned plant and hence generating a second risk evaluation result for each abandoned plant, which, in turn, produces an investigation list of each abandoned plant as a basis for follow-up investigation.

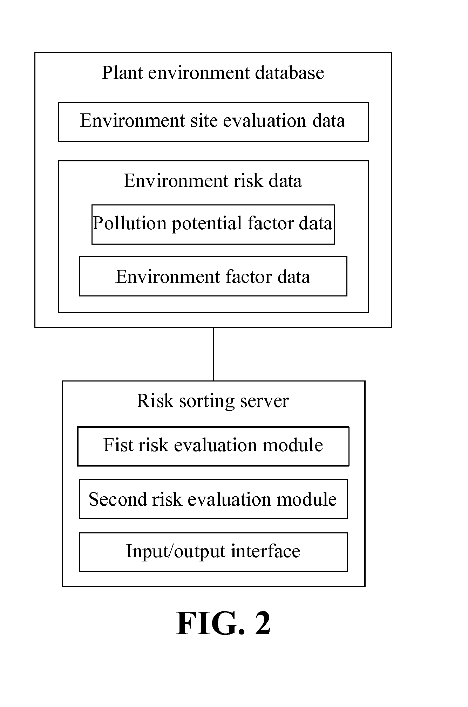

Fig. 2 shows a block diagram representing the plant environment database 120 and the risk sorting server 110 employed in the environmental risk sorting system 100 of the present invention. It is noted that the environmental site evaluation data and the several pieces of environmental risk data are stored within the plant environment database 120, wherein the several pieces of environmental risk data consists of pollution potential factor data and environmental factor data.

A pollution potential factor database 140 is used for storing and providing the pollution potential factor data. Preferably, the pollution potential factor data includes plant site area ($A_1$), year of running ($A_2$), former record for air, water, waste and poisonous substances ($A_3$), number of transfer owners ($A_4$), potential ground water pollution ($A_{5gw}$), potential soil pollution ($A_{5soil}$), amount of discharged polluted water into the ground ($B_{gw}$), amount of soil pollution ($B_{soil}$), human toxicity potential groundwater pollution ($HTP_{gw}$) and human toxicity potential soil pollution ($HTP_{soil}$).

A transfer factor database 150 is used for storing and providing transfer factor data. Preferably, the transfer factor data includes infiltration amount factor ($C_1$), topography factor ($C_2$), soil medium factor ($C_3$), ventilation layer medium factor ($C_4$), hydraulic conductivity coefficient factor ($C_5$), groundwater depth factor ($C_6$) and aquifer medium factor ($C_7$).

A risk factor receptor database 160 is used for storing and providing risk factor receptor data. Preferably, the risk factor receptor data includes population density factor ($D_1$), soil /sediment contact risk factor ($D_2$) and groundwater contact risk factor ($D_3$).

A value computing server 111 fetches data from the pollution potential factor database 140 to generate after computing the pollution potential factor data.

A geographic analyzing server 112 is coupled respectively to the transfer factor database 150 and the risk factor receptor database 160 for analyzing the data fetched therefrom so as to generate the environmental factor data after analyzing process for transmitting to the risk sorting server 110.

The risk sorting server 110, as shown in Fig. 2, includes an input/output interface, the first risk evaluation module and the second risk evaluation module. The risk sorting server 110 executes and generates through the first risk evaluation module, the first risk evaluation result for each abandoned plant, a second risk evaluation result for each abandoned plant through the second risk evaluation module. In addition, the input/output interface is used for inputting data into and outputting data from the risk sorting server 110.

The managing server 130 is coupled with the risk sorting server 110, fetches data from the plant environment database 120, the pollution potential factor database 140, the transfer factor database 150 and the risk factor receptor database 160. Alternately, the managing server 130 fetches the first and second risk evaluation results from the risk sorting server 110. In addition, the managing server 130 further includes a management recorder 170 for legally recording the investigated progress and management data and for fetching data therefrom.

Preferably, the management recorder 170 includes investigated progress and management data. To be more specific, the investigated progress and management data include names of investigators and specific site or region, into which the specific investigator enters a certain time period for conducting the inspection, thereby providing effective management to the abandoned plants.

The managing server 130 further includes a management record system 180 to permit the investigators 190 to enter and can see the investigated progress and management data. Preferably, the investigated progress and management data include number of abandoned plants at specific site or region, number of abandoned plants being investigated, evaluation degree and are supplied to the management recorder 170.

In other words, the investigator 190 is capable of fetching the investigated progress and management data, the environmental site evaluation data or the on-spot environmental risk data from the management recording system 180 so as to supply the same to the managing server 130 or the risk sorting server 110.

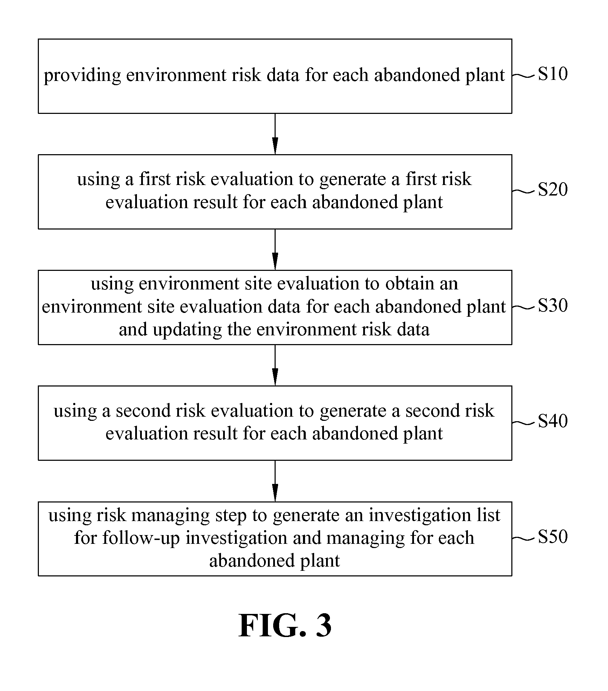

Fig. 3 illustrates a block diagram including the steps of environmental risk sorting operation according the environmental risk sorting system of the present invention. The environmental risk sorting operation includes the following steps.

Prior to the step S10, the risk sorting server 110 fetches the pollution potential factor data from the value computing server 111 and stores the same in the plant environment database 120, which is analyzed by the geographic analyzing server 112 so as to obtain the environmental factor data, that is stored within the plant environment database 120, thereby establishing the plant environment database 120 having the environmental risk data for each abandoned plant.

In the step S20, using the first risk evaluation module to generate, based on the environmental factor data and the potential pollution data from the plant environment database, the first risk evaluation result for each abandoned plant and the environmental site evaluation list, wherein the first risk evaluation result in fact is a first risk evaluation value $(T_1)$ and a first risk level defined by the first risk evaluation value $(T_1)$. In this embodiment, the first risk evaluation value $(T_1)$ is computed from the following equation 1:

$$T_1 = \left(S_{gw,1} + S_{soil,1}\right) \times F \qquad (1)$$

In the above equation, $S_{gw,1}$ is a first underground water environmental risk factor; $S_{soil,1}$ is a first soil environmental risk factor; and F is a weighting factor. Assuming the weighting factor F = 1.5, the first underground water environmental risk factor $S_{gw,1}$ and the first soil environmental risk factor $S_{soil,1}$ can be computed respectively from the equations (2) and (3);

$$S_{gw,1} = \sqrt{\left(P_{gw,1}^2 + C_{gw}^2 + D_{gw}^2\right)/3} \qquad (2)$$

$$S_{soil,1} = \sqrt{\left(P_{soil,1}^2 + C_{soil}^2 + D_{soil}^2\right)/3} \qquad (3)$$

In the above equation, $P_{gw,1}$ and $P_{soil,1}$ respectively represent the first underground water and potential soil pollution factors; $C_{gw}$ and $C_{soil}$ respectively stand for underground water and soil environmental transfer factor; and $D_{gw}$ and $D_{soil}$ respectively represent underground water and soil pollution receptor factor. According to the environmental risk data, the first underground water $P_{gw,1}$ and the first potential soil pollution factor $P_{soil,1}$ from the equations (2) and (3) can be computed from the following equations (4) and (5). However, owing to different running operation of the plants and time differences, the total sum for the potential pollution value of each abandoned plant is:

$$\boldsymbol{P_{gw,1}} = \Sigma \, [(A_1 \times A_2 \times B_{gw} \times \boldsymbol{I_1} \times (1+A_3) \times \boldsymbol{I_2}) \, (1+A_4 \times \boldsymbol{I_3} + \boldsymbol{I_4}) \times \boldsymbol{I_5} \times (1+A_{5gw}) \times HTP_{gw}] \times \boldsymbol{I_6} \qquad (4)$$

$$\boldsymbol{P_{soil,1}} = \Sigma \, [(A_1 \times A_2 \times B_{soil} \times \boldsymbol{I_1} \times (1+A_3) \times \boldsymbol{I_2}) \, (1+A_4 \times \boldsymbol{I_3} + \boldsymbol{I_4}) \times \boldsymbol{I_5} \times (1+A_{5soil}) \times HTP_{soil}] \times \boldsymbol{I_6} \qquad (5)$$

The underground water and soil environmental transfer factors $C_{gw}$ and $C_{soil}$ from equations (2) and (3) can be computed from the following equations (6) and (7);

$$C_{gw} = C_1 + C_5 + C_6 + C_7 \qquad (6)$$

$$C_{soil} = C_2 + C_3 + C_4 \qquad (7)$$

The underground water $D_{gw}$ and the soil pollution receptor factor $D_{soil}$ of equations (2) and (3) can be computed from the following equations (8) and (9);

$$D_{gw} = D_1 + D_3 \qquad (8)$$

$$D_{soil} = D_1 + D_2 \qquad (9)$$

The corresponding value for the previous air pollution, water pollution, waste, poisonous chemical record factors ($A_3$) are shown in table 1, the corresponding value of plant transfer time factor ($A_4$), if transfer of the plant ownership take place once 1, if there is no transfer of plant ownership 0; the corresponding value for infiltration amount factor ($C_1$), topographical factor ($C_2$), soil medium factor ($C_3$) and ventilation layer medium factor ($C_4$) are shown in table 2; the corresponding value for hydraulic conductivity factor ($C_5$), groundwater depth factor ($C_6$) and aquifer medium factor ($C_7$) are shown in table 3; and the corresponding value for population density factor ($D_1$), soil/sediment contact risk factors ($D_2$), and groundwater risk contact factor ($D_3$) are shown respectively in tables 4-6.

Table 1 the corresponding potential factor values for the previous air pollution, water pollution, waste, poisonous chemical record factors;

| the previous air pollution, water pollution, waste, poisonous chemical record factors | $A_3$ corresponding to pollution potential factor |
|---|---|
| No record | 0 |
| The submitted previous air pollution, water pollution, waste, poisonous chemical record factors | 0.5 |
| The previous environmental water pollution record | 1 |

Table 2 $C_1 \sim C_4$ transfer factor of the corresponding transfer factor value

| ($C_1$) infiltration amount (cm/year) | value | ($C_2$) topographical inclination (%) | value | ($C_3$) soil medium and pH | Value | ($C_4$) ventilation layer medium factor | Value |
|---|---|---|---|---|---|---|---|
| 0-2.5 | 0.8 | 18-99 | 0.6 | >10 | 1.2 | basalt | 1.2 |
| 2.5-5 | 1.6 | 15-18 | 1.2 | 9 | 2.4 | dolomite | 2.4 |
| 5-6.7 | 2.4 | 12-15 | 1.8 | 8 | 3.6 | marble | 3.6 |
| 6.7-8.3 | 3.2 | 10-12 | 2.4 | 7 | 4.8 | limestone | 4.8 |

(continued)

| (C$_1$) infiltration amount (cm/year) | value | (C$_2$) topographical inclination (%) | value | (C$_3$) soil medium and pH | Value | (C$_4$) ventilation layer medium factor | Value |
|---|---|---|---|---|---|---|---|
| 8.3~10 | 4 | 6-10 | 3 | 6 | 6 | coal | 6 |
| 10-14 | 4.8 | 5-6 | 3.6 | 5 | 7.2 | quartz schist | 7.2 |
| 14-17 | 5.6 | 4-5 | 4.2 | 4 | 8.4 | marl | 8.4 |
| 17-25 | 6.4 | 3-4 | 4.8 | 3 | 9.6 | claystone | 9.6 |
| >25 | 8 | 2-3 | 5.4 | 2 | 10.8 | silty clay | 10.8 |
| - | - | 0-2 | 6 | 1 | 12 | clay | 12 |

Table 3 C$_5$~ C$_7$ transfer factor of the corresponding transfer factor value

| (C$_5$) hydraulic conductivity factor (m/day) | Value | (C$_6$) groundwater depth factor (m) | Value | (C$_7$) aquifer medium factor | Value |
|---|---|---|---|---|---|
| <4 | 0.6 | 0~1.5 | 10 | Quartzite, granite | 0.6 |
| 4~8 | 1.2 | 1.5~3.5 | 9 | quartz schist, red clay | 1.2 |
| 8~12 | 1.8 | 3.5~4.5 | 8 | schist, shale | 1.8 |
| 12~20 | 2.4 | 4.5~6.75 | 7 | limestone, ansun rock | 2.4 |
| 20~28 | 3 | 6.75~9 | 6 | silty sand, silty clay | 3 |
| 28~34 | 3.6 | 9~12 | 5 | marble, coal | 3.6 |
| 34~40 | 4.2 | 12~15 | 4 | volcanic rock, sandy gravel | 4.2 |
| 40~60 | 4.8 | 15~22.5 | 3 | domolite | 4.8 |
| 60~80 | 5.4 | 22.5~30 | 2 | basalt | 5.4 |
| >80 | 6 | >30 | 1 | boulder | 6 |

Table 4 D$_1$ receptor risk factor and the corresponding receptor risk factor value

| (D$_1$) density (person/km2) | value |
|---|---|
| ≦ 500 | 1 |
| 500~1000 | 2 |
| 1000~5000 | 4 |
| 5000~12000 | 6 |
| 12000~47000 | 8 |
| ≧ 47000 | 10 |

Table 5 D$_2$ receptor risk factor and the corresponding receptor risk factor value

| Soil implementation level | Receptor | (D$_2$) soil/sediment contact risk factors |
|---|---|---|
| Agriculture | Farmer: resident | 20 |
| Aquaculture | aquaculture industry: resident | 16 |
| Forest | Visitor | 2 |

(continued)

| Soil implementation level | Receptor | $(D_2)$ soil/sediment contact risk factors |
|---|---|---|
| Traffic | Visitor | 0 |
| Reservoir | Farmer: resident | 16 |
| Groundwater well | Farmer: resident | 0 |
| Water conservancy | staff: visitor | 4 |
| Residential house | resident, children | 6 |
| Business | staff: resident | 4 |
| Culture & education | Children : resident | 6 |
| Building | Staff: resident | 4 |
| Environment | Staff: resident | 4 |
| Industry | Staff: resident | 4 |
| Medical treatment | Staff: resident | 4 |
| Public | Staff: resident | 4 |
| Recreation | Visitor | 2 |

Table 6 $D_3$ receptor risk factor and the corresponding receptor risk factor value

| Soil implementation level | Receptor | $(D_3)$ groundwater risk contact potential factors |
|---|---|---|
| Agriculture | Farmer: resident | 6 |
| Aquaculture | Aquaculture Industry: resident | 6 |
| Forest | Visitor | 2 |
| Traffic | Visitor | 0 |
| Reservoir | Farmer: resident | 6 |
| Groundwater well | Farmer: resident | 20 |
| Water conservancy | Staff: visitor | 6 |
| Residential housing | Resident: children | 20 |
| Business | Staff: resident | 6 |
| Culture and Education | Children: Resident | 6 |
| Building | Staff: resident | 6 |
| Environment | Staff: resident | 6 |
| Industry | Staff: resident | 6 |
| Medical treatment | Staff: resident | 6 |
| Public | Staff: resident | 6 |
| Recreation | Visitor | 2 |

wherein, the first risk evaluation value $(T_1)$ of the abandoned plants, and the accumulated of first risk level are shown in table 7. The high risk level and scope is 90% greater than the accumulated first risk evaluation value, i.e., the first risk evaluation value $(T_1)$ ranges 60-100; the middle high risk level is 50%~90 greater than the accumulated first risk evaluation value, i.e., the first risk evaluation value $(T_1)$ ranges 40-59, the middle risk level is greater than 10~50% of the accumulated first risk evaluation value, i.e., the first risk evaluation value $(T_1)$ ranges 30-39 while the low risk level is 10% smaller than the accumulated first risk evaluation value, i.e., the first risk evaluation value $(T_1)$ ranges 0-29.

Table 7 first risk evaluation value and abandoned plants, accumulated first risk evaluation level

| First risk level | Accumulated rate (%) | First risk evaluation value |
|---|---|---|
| Low risk level | 0 | 20.86 |
| Middle risk level | 10 | 32.32 |
| | 20 | 34.21 |
| | 30 | 36.19 |
| | 40 | 37.94 |
| Middle high risk level | 50 | 41.53 |
| | 60 | 50.23 |
| | 70 | 53.37 |
| | 80 | 56.41 |
| High risk level | 90 | 59.55 |
| | 100 | 78.13 |

In the environmental site evaluation step S30, the investigator fetches the environmental site evaluation list through the management record system, which generates the environmental site evaluation data and the on-spot environmental risk data. Then, the environmental site evaluation data and the on-spot environmental risk data are stored within the plant environment database via the managing server 130 and the risk sorting server 120. In addition, when the on-spot environmental risk data does not match with the environmental risk data stored within the plant environment database 120, the environmental risk data within the plant environment database 120 are updated based on the on-spot environmental risk data. Table 8 illustrates comparing of the environmental risk data before and after updating. In one embodiment of the environmental site evaluation step S30, the former environmental risk data are replaced by the updated environmental risk data, as shown in Table 8, and the corresponding factor data of the updated environmental risk data includes plant running quality factor ($I_1$), plant facilities factor ($I_2$), history of plant relocation factor ($I_3$), previous environmental spill or accident factor ($I_4$), pollution potential factor($I_5$) and change in land or land quality inspection rating factor ($I_6$). The on-spot environmental risk data preferably includes at least one potential site pollution factor data, at least one transfer factor data or at least one risk factor receptor data.

Table 8 before and after updating the environmental risk data

| Factor | Environmental risk data | |
|---|---|---|
| | Before | After |
| (A1) Plant Area | 600 square meter | 1, 250 square meter |
| (A2) Running year (of plant) | 5 yr | 3 yr |
| (A3) Pollution Record | Air once | twice for air thrice for waste water Once for poisonous substance |
| (A4) Number of change (plant) | Twice | 5 times |

In the second risk evaluation step S40: the investigator fetches the updated environmental risk data and the environmental site evaluation data from the plant environment database 120 via the second risk evaluation module so as to compute out the second risk evaluation result for each abandoned plant, wherein the second risk evaluation result in fact is the second risk evaluation value ($T_2$), from which the second risk level is defined. The second risk evaluation value ($T_2$) can be computed from the following equation 10:

$$T_2 = \left(S_{gw,2} + S_{soil,2}\right) \times F \quad (10)$$

wherein, $S_{gw,2}$ is a second groundwater environmental risk factor; $S_{soil,2}$ is the second soil environmental risk factor; F is the weighting factor, in one embodiment it is assumed as 1.5. The second groundwater environmental risk factor $S_{gw,2}$

and the second soil environmental risk factor $S_{soil, 2}$ of the above equation (10) can be computed from the following equations (11) and (12) respectively:

$$S_{gw,2} = \sqrt{\left(P_{gw,2}^2 + C_{gw}^2 + D_{gw}^2\right)/3} \qquad (11)$$

$$S_{soil,2} = \sqrt{\left(P_{soil,2}^2 + C_{soil}^2 + D_{soil}^2\right)/3} \qquad (12)$$

wherein, $P_{gw, 2}$ and $P_{oil, 2}$ respectively represent the second ground water and the second soil potential pollution factor; $C_{gw}$ and $C_{soil}$ respectively represent ground water and soil environmental transfer factor; $D_{gw}$ and $D_{soil}$ respectively represent ground water and soil pollution receptor factors. The second ground water $P_{gw, 2}$ and the second soil pollution potential factor $P_{soil, 2}$ of the above equations (11) and (12) are based on the updated environmental risk data and the environmental site risk evaluation data and can be computed from the following equations (13) and (14), wherein, owing to different running operation of the plants and time differences, the total sum for the potential pollution value of each abandoned plant is:

$$\boldsymbol{P_{gw, 2}} = \Sigma \left[(A_1 \times A_2 \times B_{gw} \times \boldsymbol{I_1} \times (1+A_3) \times \boldsymbol{I_2})\, (1+A_4 \times \boldsymbol{I_3} + \boldsymbol{I_4})\, \times \boldsymbol{I_5} \times (1+A_{5gw}) \times HTP_{gw}\right] \times \boldsymbol{I_6}$$

$$(13)$$

$$\boldsymbol{P_{soil, 2}} = \Sigma \left[(A_1 \times A_2 \times B_{soil} \times \boldsymbol{I_1} \times (1+A_3) \times \boldsymbol{I_2})\, (1+A_4 \times \boldsymbol{I_3} + \boldsymbol{I_4})\, \times \boldsymbol{I_5} \times (1+A_{5soil}) \times HTP_{soil}\right] \times \boldsymbol{I_6} \qquad (14)$$

wherein, the evaluated ways of the updated environmental risk data and the previous environmental risk data and the evaluated value of the environmental site evaluation factor data ($I_1 \sim I_5$) are shown in the following Table 9. An important aspect to note is that for the common knowledge in this technical field, Table 9 clearly shows the sorting level and recycling of the value of environmental site evaluation is likely happened. Preferably, the value of environmental site evaluation data of the present invention is determined by professional persons, who possess the following qualifications (1) professional technicians possessing environmental engineering, applied geology, geotechnical engineering practice license; (2) persons having more than three years, soil or groundwater pollution investigation after completing at least Master Degree from public or private university or independent college recognized by the Ministry of Education or foreign university in engineering or site assessment of relevant work experience; and (3) persons having more than five years in soil or groundwater pollution investigation after graduating in the engineering, agriculture, medicine field from public or private university recognized by the Ministry of Education or foreign university or relevant work experience. More preferably, the previously mentioned persons should have been trained through the government agency in charge of environmental protection, and have passed or completed the test concerning environmental protection.

Table 9 factor correction table for sorting abandoned plant through the second risk evaluation

| Name of factor | Amended code | Description | | | Difference |
|---|---|---|---|---|---|
| Operation quality of plant | $I_1$ | To further control operation quality of plants via the environmental site evaluation data, the evaluation value is set in advance 1: | | | New |
| | | $I_1$ | Highlight | | |
| | | 1 | No specific plant data except the speculated pollution generating substances used by the plant owner or list of some control of pollutants | | |
| | | 0.8 | The controlled pollutants include such as dioxins, PCBs, pesticides, chlorinated organics, which are difficult to break down according to EPA method of soil pollution in the environment | | |
| | | 0.6 | controlled pollutants include such as heavy metals, volatile organic solvents, oil of non-pollution of soil according to EPA regulated law | | |
| | | 0.4 | Plant operation includes pollutants such as volatile organic solvents, semi-volatile organic solvents, toxic chemicals, and other environmental hormones which are excluded from EPA regulated law | | |
| | | 0.1 | No pollutants found during operation of plant | | |
| Profess devices rating | $I_2$ | To further control process devices of plants via the environmental site evaluation data, the evaluation value is set in advance 1: | | | New |
| | | $I_2$ | Highlight | | |
| | | 2.0 | Process devices include wet operation, like wastewater treatment facilities, underground storage tanks, discharge ditches or pipes, sumps or wells | | |
| | | 1.6 | Process devices includes ground storage tank, tank and other facilities for loading liquid, raw materials, semi-finished or finished products | | |
| | | 1.4 | Process devices generates dust, slag, bottom ash and other waste containing heavy metals | | |
| | | 0.5 | Process devices use organic solvents for cleaning and wiping, dilution and coating, but no wastewater generated | | |
| | | 0.1 | Not significant pollution potential, such as plastic injection, wood cutting, assembling parts found | | |

(continued)

| Name of factor | Amended code | Description | | | Difference |
|---|---|---|---|---|---|
| history of plant relocation | $I_3$ | To further understand history of plant relocation via the environmental site evaluation data, the evaluation value is set in advance 1: | | | New |
| | | | $I_3$ | Highlight | |
| | | | 1 | No relocation found | |
| | | | 0 | Located at its initial spot, no relocation recorded | |
| Occurrence of pollution or accident | $I_4$ | To further understand safety of working environment via the environmental site evaluation data, the evaluation value is set in advance 0: | | | New |
| | | | $I_4$ | Highlight | |
| | | | 1 | Each of leak of pollutant, outbreak of fire or accident in short time results in 1 score | |
| | | | 0 | No record of leak of pollutant, outbreak of fire or any accident | |
| Potential pollution rating | $I_5$ | To further understand the status of plant pollution via the environmental site evaluation data, the evaluation value is set in advance 1: | | | New |
| | | | $I_5$ | Highlight | |
| | | | 2.0 | On-spot inspection finds dumping, broken or damaged tank, tank or sump; or dust collection, slag, and other spilling, sediment spreading circumstances | |
| | | | 1.6 | On-spot inspection finds bare ground, and found to have abnormal color, projections, and piles of unknown substances or soil | |
| | | | 1.4 | cracks in cement floor, patching on floor, water pool or pond | |
| | | | 0.5 | The initial plant is brick or iron building, no demolition or alteration records, no obvious abnormalities | |
| | | | 0.1 | The initial plant is reinforced concrete buildings, no demolition or alteration record, no significant pollution found. | |
| soil or land quality | $I_6$ | To further understand the soil quality of plant via the environmental site evaluation data, the evaluation value is set in advance 1: | | | New |
| | | | $I_6$ | Highlight | |
| | | | 0.5 | Under environmental evaluation by authority concerned, no record of soil or land pollution found in the plant. | |
| | | | 0.1 | Inspection of soil or land carried out under regulations 8 and 9, no record of soil or land pollution found in the plant. | |
| | | | 0.01 | The plant's location was a former living community and hence undergone land renovation | |

In the risk managing step S50, an investigation list of each abandoned plant is generated based on the second risk evaluation result as a basis for follow-up investigation. Firstly, the investigation list is defined based on the second risk level and the second risk evaluation value ($T_2$), that is a high risk investigation list is defined when the second risk evaluation value ($T_2$) ranges 60-100%, a middle high risk investigation list is defined when the second risk evaluation value ($T_2$) ranges 40~59%; a middle risk investigation list is defined when the second risk evaluation value ($T_2$) ranges 30~39% and a low risk investigation list is defined when the second risk evaluation value ($T_2$) ranges 0~29%. Afterward, based those investigation lists, the following Table 10 is drawn as a basis for follow-up investigation, wherein plant A...I indicates code for abandoned plant. In addition, the management recorder 170 fetches the investigated progress and management data via the managing server 130 such that the investigator 190 can fetch via the management record system 180 the investigated progress and management data from the managing server 130, thereby updating them. Table 10 is an example of an investigation list and managing plan.

Table 10 investigation list and managing plan

| List | Abandoned plant | Follow-up managing plan |
|---|---|---|
| Low risk investigation list | Plant A | No obvious public environmental risk, no need of follow-up investigation. |
| Middle risk investigation list | Plant D, F | No obvious public environmental risk, soil follow-up investigation is needed. |
| Middle high risk investigation list | Plant B, C | Based on soil and groundwater pollution potential factor value, plant evaluation is required. |
| High risk investigation list | Plant E, G, H, I | Need on-spot site investigation |

Table 11 Environmental site evaluation and management data

| Region | Number of plant to investigate | Investigated Number | Completion (%) |
|---|---|---|---|
| I | 186 | 168 | 90 % |
| II | 76 | 9 | 12 % |
| III | 36 | 26 | 72% |

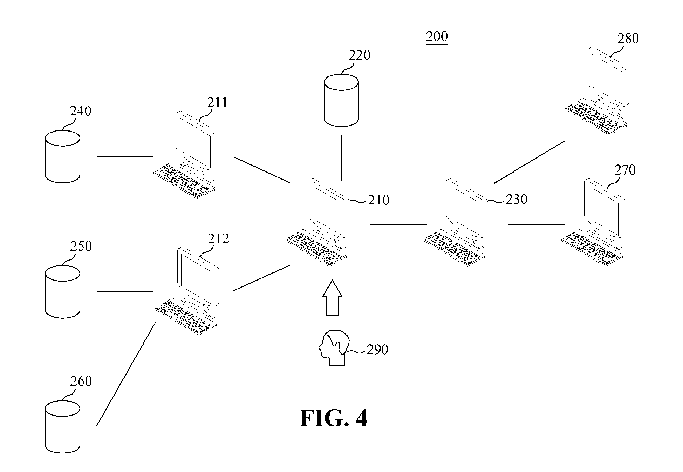

Fig. 4 illustrates a modified first embodiment structure representing the environmental risk sorting system 200 of the present invention, wherein the investigator 290 fetches the data directly from the input/output interface of the risk sorting server 210 and inputs the environmental site evaluation data and the on-spot environmental evaluation data into the risk sorting server 210 via the input/output interface. In addition, the environmental risk sorting system 200 of the present invention performs the environmental risk sorting operation through the steps shown in Fig. 3.

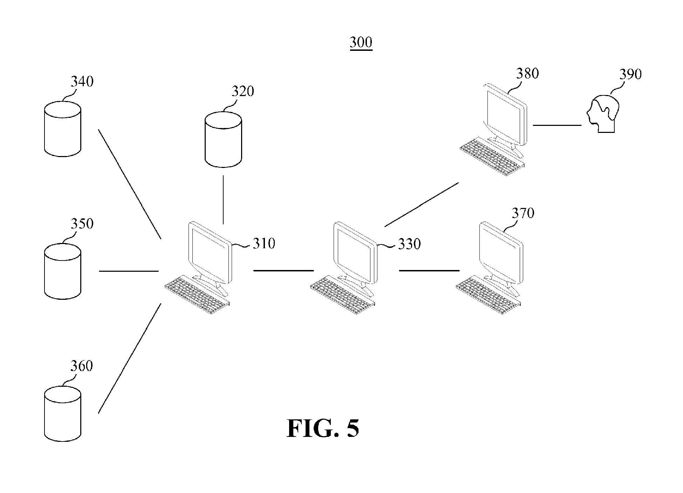

Fig. 5 illustrates a second embodiment structure representing the environmental risk sorting system 300 of the present invention, and includes the following.

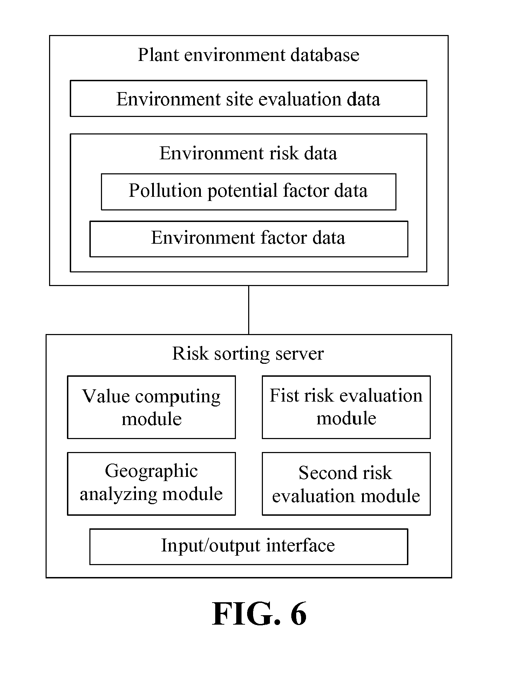

As shown in Fig. 6, the several pieces of environmental risk data stored in the plant environment database 320 includes an environmental site evaluation data, a pollution potential factor data and an environmental factor data.

A pollution potential database 340 is used for storing the pollution potential factor data. Preferably, the pollution potential factor data includes plant area ($A_1$), plant running year ($A_2$), the previous air pollution, water pollution, waste, poisonous record factors ($A_3$), plant transfer time factor ($A_4$), potential ground water pollution factor ($A_{5gw}$) of a respective plant, potential soil pollution factor ($A_{5soil}$), amount of discharged polluted water into the ground ($B_{gw}$), amount of soil pollution ($B_{soil}$), human toxicity potential groundwater pollution ($HTP_{gw}$) and human toxicity potential soil pollution ($HTP_{soil}$).

A transfer factor database 350 is used for storing transfer factor data, which preferably includes infiltration amount factor ($C_1$), topography factor ($C_2$), soil medium factor ($C_3$), ventilation layer medium factor ($C_4$), hydraulic conductivity coefficient factor ($C_5$), groundwater depth factor ($C_6$) and aquifer medium factor ($C_7$).

A risk factor receptor database 360 is used for storing and providing risk factor receptor data. Preferably, the risk factor receptor data includes population density factor ($D_1$), soil /sediment contact risk factor ($D_2$) and groundwater contact risk factor ($D_3$).

A shown in Fig. 6, the risk sorting server 310 includes a first risk evaluation module, a second risk evaluation module, an input/output interface, a value computing module, a geographic analyzing module. The risk sorting server 310 executes the pollution factor data through the value computing module to generate the pollution potential factor data for storing within the plant environment database 420, analyzes the transfer factor data and the risk receptor data through the geographic analyzing module to generate the environmental factor data for storing within the plant environment database. The risk sorting server 310 further generates through the first risk evaluation module a first risk evaluation result for each abandoned plant, and through the second risk evaluation module a second risk evaluation result for each abandoned plant.

A managing server 330 is coupled with the risk sorting server 310, fetches data from the plant environment database 320, the pollution potential factor database 340, the transfer factor database 350 and the risk factor receptor database 360. Alternately, the managing server 330 fetches the first and second risk evaluation results from the risk sorting server 110. In addition, the managing server 330 further includes a management recorder 370 and a management recording system 380.

The management recorder 370 fetches the data via the managing server 330 or provides the investigation progress and the management data to the managing server 330.

Alternately, the investigator 390 is capable of entering the managing server 330 and fetching data and hence providing the investigated progress and management data the managing server 330.

The investigator 390 is capable of fetching data from the managing sever 330 via the management recording system 380 and after investigation provides the investigated progress and management data, the environmental site evaluation data or the on-spot environmental site evaluation data to the managing server 330 or the risk sorting server 310.

The steps for environmental risk sorting operation in the second embodiment of the environmental risk sorting system of the present invention are best shown in Fig. 3.

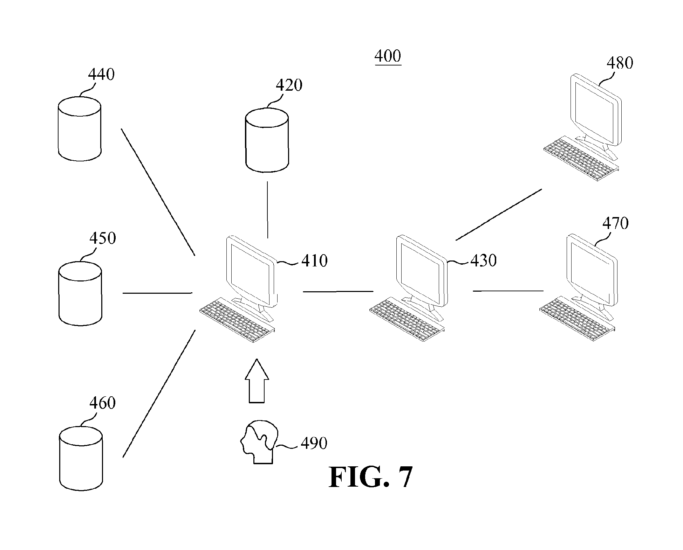

Fig. 7 illustrates a modified second embodiment structure representing the environmental risk sorting system 400 of the present invention, wherein the investigator 490 can directly fetch data from the input/output interface of the risk sorting server 410 and after analyzing supplies the environmental site evaluation data and the on-spot environmental site evaluation data to the risk sorting server 410. In addition, the environmental risk sorting system 400 of the present invention performs the environmental risk sorting operation through the steps shown in Fig. 3.

Preferably, the risk sorting server 110, 210, 310 or 410 includes a sorting module for conducting a conditional sorting procedure prior to the step S10, based on location area of the environmental risk data, stories of the abandoned plant, to classify the abandoned plants into different groups, so as to serve as follow-up investigation for the specific group with lesser pollution, thereby avoiding the undesired investigation process. For instance, the abandoned plant concerns metal industry, having a surface area 1378 square meter, registered in 1995, abandoned in 2003, the registered address is No. XXX, 4F, X road and etc. According to the environmental risk data, the above abandoned plant is included in the middle high risk list based on the first risk evaluation result, a further investigation is needed. Since the abandoned plant is located at $4^{th}$ floor, there should not be any soil or water pollution potential data. Owing to the merit of conditional sorting procedure, the above mentioned plants can be re-classified into another groups, thereby avoiding the environmental risk evaluation resulted from the first risk evaluation list.

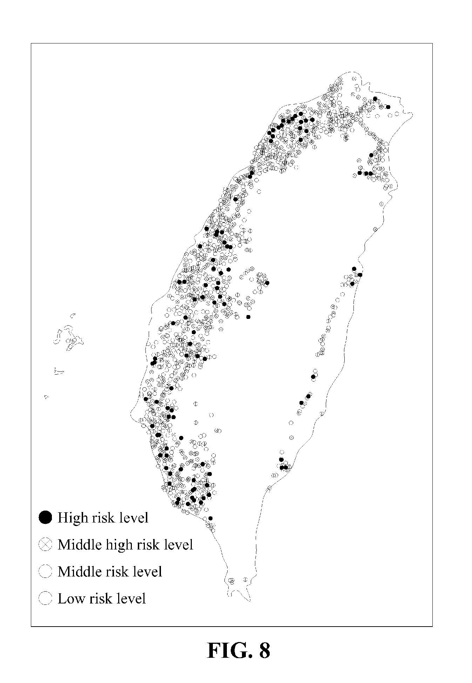

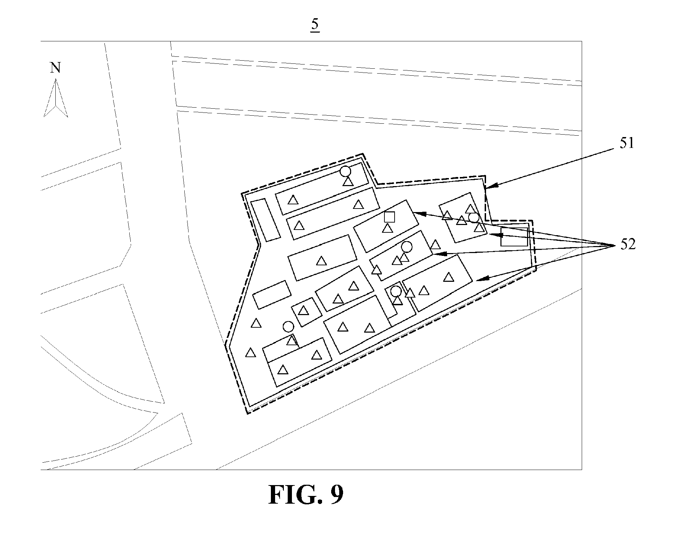

In one embodiment of the present invention, the risk sorting server 110, 210, 310 or 410 further includes a statistics module for generating a risk evaluation result, which generates a statistic table after fetching data from the risk sorting server, wherein, the risk evaluation result include the first risk evaluation result and the second risk evaluation result. The data fetched from the risk sorting server can be also from one of the plant environment database, the pollution factor database, the transfer factor database or the transfer receptor factor database. The investigator can look into the statistic table based on the conditional sorting procedure. The risk sorting server 110, 210, 310 or 410 further includes a drawing module for generating, based on the risk evaluation result and the statistic table, an environmental risk evaluation map, as shown in Fig. 8. In addition, the drawing module is capable of generating, based on an investigated progress and management data supplied by the managing server, an investigated scope map, which includes a plurality of digitally shown location areas, each with a specific scope representing the investigated progress and management data. Fig. 9 a top planar view of an investigated scope map employed in the environmental risk sorting system of the present invention, wherein the digital drawing 5 includes locations areas 51 (shown by dotted lines) with specific scope consisting of investigated progress and the actual scope areas data 52 (shown by solid lines). The specific scope of the location areas 51 may include information concerning intended use of the plot of plant. The investigated scope map includes a first certain areas used as plant location previously while the actual scope area data 52 includes the location areas 51 with the specific scope, more detailed information, such as a second certain areas were intended as plant site. Hence, the digital drawing 5 definitely and explicitly shows the detailed areas with their respective plan usage of the plant land.

Although the present invention has been described with reference to the preferred embodiments thereof, it is apparent to those skilled in the art that a variety of modifications and changes may be made without departing from the scope of the present invention which is intended to be defined by the appended claims.

**Claims**

1. An environmental risk sorting system for monitoring abandoned plants which cause environmental pollution, comprising:

   a plant environment database for storing environmental risk data;
   a risk sorting server coupled with said plant environment database for updating said environmental risk data;
   a managing server coupled with said risk sorting server, **characterized in that**: said risk sorting server comprising:

   a first risk evaluation module, based on said environmental risk data, generates a first risk evaluation result for each abandoned plant, which produces an environmental site evaluation list, through which, an environmental site evaluation data of each abandoned plant and a on-spot environmental site evaluation data are obtained; and
   a second risk evaluation module, based on said environmental site evaluation data and said on-spot environmental site evaluation data of each abandoned plant, generates a second risk evaluation result for each abandoned plant, which, in turn, produces an investigation list of each abandoned plant as a basis for follow-up investigation.

2. The environmental risk sorting system according to claim 1, wherein said risk sorting server further classifies said abandoned plants into different groups based on said several pieces of environmental risk data;

3. The environmental risk sorting system according to claim 1, wherein said risk sorting server stores said environmental site evaluation data and said on-spot environmental site evaluation data in said plant environment database.

4. The environmental risk sorting system according to claim 1, wherein said risk sorting server includes said first risk evaluation module and said second risk evaluation module.

5. The environmental risk sorting system according to claim 1, wherein said risk sorting server further includes an input/output interface, which receives said environmental site evaluation data and said on-spot environmental site evaluation data and which outputs said environmental evaluation list and said investigation list to said managing server.

6. The environmental risk sorting system according to claim 1, wherein said several pieces of environmental risk data includes pollution potential factor data and environmental factor data.

7. The environmental risk sorting system according to claim 6, further comprising a value computing server coupled to said risk sorting server and a pollution factor database connected to said value computing server so as to obtain said pollution potential factor data for transmitting to said risk sorting server.

8. The environmental risk sorting system according to claim 6, further comprising a geographic analyzing server coupled to said risk sorting server, a transfer factor database and a risk factor receptor database respectively connected to said geographic analyzing server so as to obtain said environmental factor data after analyzing process for transmitting to said risk sorting server.

9. The environmental risk sorting system according to claim 7 or 8, wherein said value computing server further includes a value computing module or said geographic analyzing server includes a geographic analyzing module, wherein said value computing module obtains said pollution potential factor data after computing process while said geographic analyzing module obtains said environmental factor data after analyzing data from said transfer factor database and said risk factor receptor database.

10. The environmental risk sorting system according to claim 6, further comprising a pollution factor database connected to said risk sorting server so as to obtain said pollution potential factor data for storing in said plant environment database.

11. The environmental risk sorting system according to claim 10, wherein said value computing server further includes a value computing module which obtains said pollution potential factor data after computing process.

12. The environmental risk sorting system according to claim 6, further comprising a transfer factor database and a risk factor receptor database respectively connected to said risk sorting server so as to obtain said environmental factor data for storing in said plant environment database.

13. The environmental risk sorting system according to claim 12, further comprising a geographic analyzing module coupled to said risk sorting server, wherein said geographic analyzing module obtains said environmental factor data after analyzing transfer factor data and risk factor receptor data.

14. The environmental risk sorting system according to claim 1, wherein sad risk sorting server further includes a statistics module for generating, based on said risk sorting server, a risk evaluation result, which generates a statistic table after fetching data from said risk sorting server; a drawing module for generating, based on said risk evaluation result and said statistic table, an environmental risk evaluation map.

15. The environmental risk sorting system according to claim 14, wherein said risk evaluation result includes a first risk evaluation result and a second risk evaluation result.

16. The environmental risk sorting system according to claim 14, wherein said risk sorting server is capable of fetching data from said plant environment database, said pollution factor database, said transfer factor database or said risk factor receptor database.

17. The environmental risk sorting system according to claim 14, wherein said drawing module generates, based on an investigated progress and management data supplied by said managing server, an investigated scope map, which includes a plurality of digitally shown location areas, each with a specific scope representing said investigated progress and management data.

18. The environmental risk sorting system according to claim 1 or 14, wherein said managing server includes an management recorder for recording said investigated progress and management data, and for fetching said environmental site evaluation list, said investigation list, said statistic table or said environmental risk evaluation map from said risk sorting server.

19. The environmental risk sorting system according to claim 1 or 14, wherein said managing server includes an management record system for recording said investigated progress and management data, and for fetching said environmental site evaluation list, said investigation list, said statistic table or said environmental risk evaluation map from said risk sorting server.

20. The environmental risk sorting system according to claim 1, wherein said first risk evaluation result includes a first risk evaluation value, from which, a first risk level is defined, wherein said environmental site evaluation list is defined based on said first risk level.

21. The environmental risk sorting system according to claim 1, wherein said second risk evaluation result includes a second risk evaluation value, from which, a second risk level is defined, wherein said investigation list is defined based on said second risk level.

FIG. 1

Plant environment database

Environment site evaluation data

Environment risk data

Pollution potential factor data

Environment factor data

Risk sorting server

Fist risk evaluation module

Second risk evaluation module

Input/output interface

# FIG. 2

providing environment risk data for each abandoned plant ⎯ S10

↓

using a first risk evaluation to generate a first risk evaluation result for each abandoned plant ⎯ S20

↓

using environment site evaluation to obtain an environment site evaluation data for each abandoned plant and updating the environment risk data ⎯ S30

↓

using a second risk evaluation to generate a second risk evaluation result for each abandoned plant ⎯ S40

↓

using risk managing step to generate an investigation list for follow-up investigation and managing for each abandoned plant ⎯ S50

# FIG. 3

**FIG. 4**

FIG. 5

Plant environment database

Environment site evaluation data

Environment risk data

Pollution potential factor data

Environment factor data

Risk sorting server

Value computing module

Fist risk evaluation module

Geographic analyzing module

Second risk evaluation module

Input/output interface

# FIG. 6

FIG. 7

FIG. 8

● High risk level
⊗ Middle high risk level
○ Middle risk level
○ Low risk level

FIG. 9

Europäisches
Patentamt

European
Patent Office

Office européen
des brevets

# EUROPEAN SEARCH REPORT

Application Number

EP 14 19 7578

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC, namely a scheme for performing a mental act. The invention relates to a system for monitoring abandoned plants which couse environmental pollution: the information technology employed as an enabler for carrying out said processes is conventional. Its use for carrying out non-technical processes forms part of common general knowledge and it was widely available to everyone at the date of filing of the present application. No documentary evidence is therefore considered necessary (see Official Journal EPO 11/2007, pages 592ff and 594ff). ----- | | INV. G06Q10/06 |

TECHNICAL FIELDS
SEARCHED        (IPC)

G06Q

The present search report has been drawn up for all claims

| Place of search | Date of completion of the search | Examiner |
|---|---|---|
| The Hague | 4 December 2015 | Sigolo, Alessandro |

EPO FORM 1503 03.82 (P04C01)

**EP 2 983 115 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 103126788